# EUROPEAN PATENT APPLICATION

(11) **EP 4 762 937 A1**
(43) Date of publication of application: **24.06.2026**
(21) Application number: 24223000.1
(22) Date of filing: 23.12.2024
(51) Int. Cl.: A23C 9/142, A23C 9/15, A23C 19/082, A23J 1/20

(54) **SUBSTITUTE DAIRY FOOD PRODUCTS AND METHODS**

(71) Applicant: Hochland SE, 88178 Heimenkirch (DE)
(72) Inventor: SPIEGEL, Thomas, 80686 München (DE); LEITER, Andreas, 88161 Lindenberg im Allgäu (DE)
(74) Representative: Patent- und Rechtsanwälte Behrmann Wagner PartG mbB

(57) **Abstract**

The invention relates to a dairy substitute food composition, the composition comprising: one or more non-animal proteins; and a liquid dairy side stream, the liquid dairy side stream being derived from mammalian milk, the liquid dairy side stream comprising water, sugar and minerals.

## Description

### FIELD OF THE INVENTION

The present disclosure relates to substitute dairy food products or dairy analogue food products and methods of making the same. More particularly, the present disclosure relates to methods of making substitute dairy food products or dairy analogue food products using recombinant protein and liquid dairy side streams that are essentially free of milk proteins and milk fat, such as acid whey, acid permeates, and permeates from milk or whey.

### BACKGROUND

There is a growing demand for alternative dairy food products (e.g. animal-free or substantially animal free dairy products) or hybrid dairy food products (e.g. dairy products with some animal-free components or plant-based products with some dairy components), whether based on ethical positions, health concerns, animal welfare concerns and/or sustainability desires. However, prior attempts at producing substitute or alternative dairy food products, i.e. animal free or vegan products, have been met with challenges. For example, such substitute products often suffer from poor consumer acceptance or poor palatability, e.g. taste and texture. Additionally, the nutritional profile of such substitute dairy products can be lacking, at least as compared to traditional dairy products, which then can require the addition of numerous additives to compensate for the deficiencies.

There is also a growing need to find ways to utilize side streams of existing and traditional dairy food manufacturing processes, i.e. acid whey, (also known as sour whey - The terms acid whey and sour whey are to be viewed as equivalent. In the following text only the term acid whey is used), acid permeates (also known as sour permeates - The terms acid permeate and sour permeate are to be viewed as equivalent. In the following text only the term acid permeate is used), milk or whey permeates (the latter two types of permeates can also be referred to as sweet permeates). The term permeate generally relates to a liquid stream that passes through a porous membrane, whereas components larger than the pores are filtered out. The most common filtration technique in dairy technology is ultrafiltration (UF), that is used to separate- and concentrate proteins. Other filtration techniques comprise microfiltration (MF, e.g. used for separation of fat and caseins from whey proteins), Nanofiltration (NF, e.g. used for separation of lactose and minerals), reverse osmosis or electrodialysis (RO, ED, both used for separation of minerals and water). A washing process with water or another diluted liquid to further purify components is known as diafiltration (DF). The different techniques can be applied alone or in any combination. As used herein, the term permeate relates to the side streams (the liquid streams that pass through the membranes) of any of these techniques and therefore comprises MF-permeates, UF-permeates, NF-permeates, RO-permeates, ED-permeates, and/or DF-permeates. Vast quantities of these by-products are available for use to reduce waste, improve sustainability and add value.

Taken together, there is an unmet need for the development of commercially viable methods, systems and processes for the preparation of substitute dairy food products or hybrid substitute dairy food products that are an improvement over existing methods, and that utilize an available by-product. The present disclosure fulfills these unmet needs, and addresses the existing challenges, using a new method for preparing substitute dairy food products using acid whey, milk or whey permeates.

### BRIEF SUMMARY

This summary lists several embodiments of the presently disclosed subject matter, and in many cases lists variations and permutations of these embodiments. This summary is merely an example of the numerous and varied embodiments. Mention of one or more representative features of a given embodiment is likewise for purposes of example. Such an embodiment can typically exist with or without the feature(s) mentioned; likewise, those features can be applied to other embodiments of the presently disclosed subject matter, whether listed in this summary or not. To avoid excessive repetition, this summary does not list or suggest all possible combinations of such features.

Provided herein in some embodiments are dairy substitute food compositions, the compositions comprising one or more non-animal proteins, and a liquid dairy side stream, the liquid dairy side stream being derived from mammalian milk, the liquid dairy side stream comprising water, sugar and minerals. In some aspects, the non-animal protein comprises a recombinant protein. In some aspects, the recombinant protein comprises a recombinant casein. In some aspects, the non-animal protein comprises a plant protein. In some aspects, the non-animal protein comprises any protein or protein source not derived from an animal or animal source. In some aspects, the dairy substitute food composition comprises about 3% to about 40% protein.

In some aspects, the dairy substitute food composition further comprises a non-animal lipid. In some aspects, the non-animal lipid comprises a plant fat or recombinant fat. In some aspects, the dairy substitute food composition comprises about 0.2% to about 40% lipid.

In some aspects, the liquid dairy side stream comprises a whey permeate, wherein the whey permeate is a by-product of cheese making from mammalian milk. In some aspects, the liquid dairy side stream comprises a permeate from milk (e.g. a sweet milk permeate), the permeate from milk comprising about 1% to about 10% total solids, about 0.01% w/w to about 0.1% w/w sodium, about 1% w/w to about 10% w/w lactose, about 0.05% w/w to about 0.5% w/w potassium, and about 0.01% w/w to about 0.1% w/w calcium. In some aspects, the liquid dairy side stream comprises a permeate from fermented or directly acidified milk (e.g. a sour milk permeate), the permeate from fermented or directly acidified milk comprising about 1% to about 10% total solids, about 0.01% w/w to about 0.1% w/w sodium, about 1% w/w to about 10% w/w lactose, about 0.05% w/w to about 0.5% w/w potassium, and about 0.05% w/w to about 0.5% w/w calcium. In some aspects, the liquid dairy side stream comprises acid whey, wherein the acid whey is derived from the production of fresh cheese, cottage cheese, quark, Greek yoghurt and/or skyr. In some aspects, the liquid dairy side stream further comprises vitamins and organic acids.

In some aspects, the substitute dairy food product comprises a cheese. In some aspects, the cheese is selected from the group consisting of a semi-hard, a hard cheese, a white cheese, a fresh cheese, a cream cheese and a soft cheese. In some aspects, the substitute dairy food product is substantially free of an animal protein and/or substantially free of an animal lipid.

In some aspects, the dairy substitute food composition further comprises one or more additional components selected from the group consisting of a cheese culture, an enzyme (e.g. lipases and proteases), salt, a hydrocolloid (e.g. starch or stabilizers), a herb, a spice, a flavoring agent, a coloring agent, and combinations thereof.

Also provided herein are methods of producing a dairy substitute food composition, the methods comprising providing one or more non-animal proteins; providing a liquid dairy side stream, liquid dairy side stream being derived from mammalian milk, the liquid dairy side stream comprising water, sugar and minerals; and mixing and dispersing the non-animal protein with liquid dairy side stream to obtain a base composition for the dairy substitute food composition. In some aspects, the non-animal protein comprises a recombinant protein. In some aspects, the recombinant protein comprises a recombinant casein. In some aspects, the non-animal protein comprises a plant protein. In some aspects, the non-animal protein comprises any protein or protein source not derived from an animal or animal source. In some aspects, the dairy substitute food composition comprises about 3% to about 40% protein.

In some aspects, the methods of making the dairy substitute food compositions further comprise providing a non-animal lipid and mixing and dispersing the non-animal lipid with the non-animal protein and the liquid dairy side stream. In some aspects, the non-animal lipid comprises a plant fat. In some aspects, the dairy substitute food composition comprises about 0.2% to about 40% lipid.

In some aspects, in the methods of making the dairy substitute food compositions the liquid dairy side stream comprises a whey permeate, wherein the whey permeate is a by-product of cheese making from mammalian milk. In some aspects, the methods of making the dairy substitute food compositions the liquid dairy side stream comprises a permeate from milk (e.g. a sweet milk permeate), the permeate from milk comprising about 1% to about 10% total solids, about 0.01% w/w to about 0.1% w/w sodium, about 1% w/w to about 10% w/w lactose, about 0.05% w/w to about 0.5% w/w potassium, and about 0.01% w/w to about 0.1% w/w calcium. In some aspects, the liquid dairy side stream comprises a permeate from fermented or directly acidified milk (e.g. a sour milk permeate), the permeate from fermented or directly acidified milk comprising about 1% to about 10% total solids, about 0.01% w/w to about 0.1% w/w sodium, about 1% w/w to about 10% w/w lactose, about 0.05% w/w to about 0.5% w/w potassium, and about 0.05% w/w to about 0.5% w/w calcium. In some aspects, the liquid dairy side stream comprises acid whey, wherein the acid whey is derived from the production of fresh cheese, cottage cheese, quark, Greek yoghurt and/or skyr. In some aspects, the liquid dairy side stream further comprises vitamins and organic acids.

In some aspects, the methods of making the dairy substitute food compositions further comprise processing the base composition to obtain a dairy substitute food composition that is substantially free of an animal fat and substantially free of an animal protein. In some aspects, the cheese substitute base is a paste-like composition.

In some aspects, a portion of the non-animal protein is mixed with the non-animal lipid to form a first mixture, wherein a portion of the non-animal protein is mixed with liquid dairy side stream to form a second mixture, wherein the first and second mixtures are blended, heated and pH adjusted to form the base composition for the dairy substitute food composition. In some aspects, the heating of the first and second mixtures in the formation of the base composition comprises heating at a temperature range of about 50°C to about 160°C. In some aspects, adjusting the pH of the first and second mixtures in the formation of the base composition comprises adjusting to a pH of about 4.0 to about 6.5.

In some aspects, the non-animal protein is mixed with the non-animal lipid to form a first mixture, wherein the first mixture is combined with liquid dairy side stream and then blended, heated and pH adjusted to form the base composition for the dairy substitute food composition.

In some aspects, the method further comprises adding one or more additional components selected from the group consisting of a cheese culture, enzymes (e.g. lipases and proteases), salt, a hydrocolloid (e.g. starch or stabilizers), a herb, a spice, a flavoring agent, a coloring agent and combinations thereof.

These and other objects are achieved in whole or in part by the presently disclosed subject matter. Other objects and advantages of the presently disclosed subject matter will become apparent to those skilled in the art after a study of the following description, examples, and drawings.

### BRIEF DESCRIPTION OF THE DRAWINGS

The presently disclosed subject matter can be better understood by referring to the following, example figure. The components in the figure are not necessarily to scale, emphasis instead being placed upon illustrating the principles of the presently disclosed subject matter (often schematically). In the figure, like reference numerals designate corresponding parts throughout the different views. A further understanding of the presently disclosed subject matter can be obtained by reference to an embodiment set forth in the illustrations of the accompanying drawing. Although the illustrated embodiment is merely for purposes of example of systems for carrying out the presently disclosed subject matter, both the organization and method of operation of the presently disclosed subject matter, in general, together with further objectives and advantages thereof, may be more easily understood by reference to the drawings and the following description. The drawing is not intended to limit the scope of this presently disclosed subject matter, which is set forth with particularity in the claims as appended or as subsequently amended, but merely to clarify and provide examples of the presently disclosed subject matter.
FIG. 1 is a schematic illustration of a method of one embodiment that includes the use of a mammalian milk derived permeate in the production of a dairy substitute food composition.
FIG. 2 is a schematic illustration of a method of one embodiment that includes the use of a mammalian milk derived permeate in the production of a dairy substitute food composition.
FIG. 3 is a schematic illustration of a method of one embodiment that includes the use of a mammalian milk derived permeate in the production of a dairy substitute food composition.
FIG. 4 is a schematic illustration of a method of one embodiment that includes the use of a mammalian milk derived permeate in the production of a dairy substitute food composition.
FIG. 5A includes images of cheese base compositions, including intermediate materials, from methods of using a mammalian milk derived permeate in the production of a dairy substitute food composition.
FIG. 5B includes images of cheese base compositions, including finished model cheeses, from methods of using a mammalian milk derived permeate in the production of a dairy substitute food composition.
FIG. 6 shows the moduli G' and G" during temperature sweeps for different model cheeses and commercial products.
FIG. 7 shows the moduli G' and G" for amplitude sweeps at 10°C and 37°C.
FIG. 8 shows results of fermentation experiments showing the course of the pH-value over time.
FIG. 9 is a schematic illustration of methods for processing milk that results in various liquid dairy side streams.
FIG. 10 is a schematic illustration of a method of using a liquid dairy side stream in the production of dairy substitute food composition.

### DETAILED DESCRIPTION

The presently disclosed subject matter now will be described more fully hereinafter, in which some, but not all embodiments of the presently disclosed subject matter are described. Indeed, the presently disclosed subject matter can be embodied in many different forms and should not be construed as limited to the embodiments set forth herein; rather, these embodiments are provided so that this disclosure will satisfy applicable legal requirements.

### I. Definitions

The terminology used herein is for the purpose of describing particular embodiments only and is not intended to be limiting of the presently disclosed subject matter.

While the following terms are believed to be well understood by one of ordinary skill in the art, the following definitions are set forth to facilitate explanation of the presently disclosed subject matter.

All technical and scientific terms used herein, unless otherwise defined below, are intended to have the same meaning as commonly understood by one of ordinary skill in the art. References to techniques employed herein are intended to refer to the techniques as commonly understood in the art, including variations on those techniques or substitutions of equivalent techniques that would be apparent to one of skill in the art. While the following terms are believed to be well understood by one of ordinary skill in the art, the following definitions are set forth to facilitate explanation of the presently disclosed subject matter.

In describing the presently disclosed subject matter, it will be understood that a number of techniques and steps are disclosed. Each of these has individual benefit and each can also be used in conjunction with one or more, or in some cases all, of the other disclosed techniques.

Accordingly, for the sake of clarity, this description will refrain from repeating every possible combination of the individual steps in an unnecessary fashion. Nevertheless, the specification and claims should be read with the understanding that such combinations are entirely within the scope of the invention and the claims.

Following long-standing patent law convention, the terms "a", "an", and "the" refer to "one or more" when used in this application, including the claims. Thus, for example, reference to "a cell" includes a plurality of such cells, and so forth.

Unless otherwise indicated, all numbers expressing quantities of ingredients, reaction conditions, and so forth used in the specification and claims are to be understood as being modified in all instances by the term "about". Accordingly, unless indicated to the contrary, the numerical parameters set forth in this specification and attached claims are approximations that can vary depending upon the desired properties sought to be obtained by the presently disclosed subject matter.

As used herein, the term "about," when referring to a value or to an amount of a composition, dose, sequence identity (*e*.*g*., when comparing two or more nucleotide or amino acid sequences), mass, weight, temperature, time, volume, concentration, percentage, *etc.*, is meant to encompass variations of in some embodiments ±20%, in some embodiments ±10%, in some embodiments ±5%, in some embodiments ±1%, in some embodiments ±0.5%, and in some embodiments ±0.1% from the specified amount, as such variations are appropriate to perform the disclosed methods or employ the disclosed compositions.

The term "comprising", which is synonymous with "including" "containing" or "characterized by" is inclusive or open-ended and does not exclude additional, unrecited elements or method steps. "Comprising" is a term of art used in claim language which means that the named elements are essential, but other elements can be added and still form a construct within the scope of the claim.

As used herein, the phrase "consisting of" excludes any element, step, or ingredient not specified in the claim. When the phrase "consists of" appears in a clause of the body of a claim, rather than immediately following the preamble, it limits only the element set forth in that clause; other elements are not excluded from the claim as a whole.

As used herein, the phrase "consisting essentially of" limits the scope of a claim to the specified materials or steps, plus those that do not materially affect the basic and novel characteristic(s) of the claimed subject matter.

With respect to the terms "comprising", "consisting of", and "consisting essentially of', where one of these three terms is used herein, the presently disclosed and claimed subject matter can include the use of either of the other two terms.

As used herein, the term "and/or" when used in the context of a listing of entities, refers to the entities being present singly or in combination. Thus, for example, the phrase "A, B, C, and/or D" includes A, B, C, and D individually, but also includes any and all combinations and subcombinations of A, B, C, and D.

Throughout this application, various embodiments of this invention may be presented in a range format. It should be understood that the description in range format is merely for convenience and brevity and should not be construed as an inflexible limitation on the scope of the invention. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

The terms "cream cheese", "yogurt", "cheese", "sour cream" and "ice cream" are well known in the art. Such compounds are known as food products made partially and/or substantially from animal milk or component(s) thereof, and can in some embodiments be generally referred to as "dairy food", "dairy foods", "dairy product" or "dairy food products".

As used herein, the terms "dairy food", "dairy product", "edible product", "food product" and the like refer to a product that is suited for human or animal, preferably human, consumption.

As used herein, "Animal-derived dairy food product" refers to dairy foods or dairy food products derived partially, substantially or entirely from an animal product such as milk or milk-components. Animal-derived dairy food product can be used interchangeably with "dairy food product", "dairy food", "dairy" and the like, which are understood in the art as traditional food products derived or made from the milk of a mammalian animal.

As used herein, the terms "substitute dairy food product", "substitute dairy food composition", "animal-free substitute dairy food product", "dairy substitute", "animal-free dairy substitute", "dairy alternative", "animal-free dairy alternative", "dairy analogue", "animal-free dairy analogue", "dairy analogue food product" and "animal-free dairy analogue food product" are used herein interchangeably and refer to any consumable/edible product or foodstuff, which is not made from or derived from animal milk, i.e. they are "substantially free", "essentially free" or "entirely free", e.g. about 99.0%, about 99.1%, about 99.2%, about 99.3%, about 99.4%, about 99.5%, about 99.6%, about 99.7%, about 99.8%, about 99.9%, and about 100.0%, free of animal proteins and animal components, and/or contain non-animal components in place of or substituted for animal components typically derived from animal products or animal milk. Stated another way, the terms "substitute dairy food product", "animal-free substitute dairy food product", and related terms above are intended to include all types of products that contain no milk that comes from cows, goats or other mammals and are devoid or "substantially free" of ingredients derived directly from the milk, but yet designed and produced to mimic their corresponding animal-based dairy products. Such products may replace animal-based products in one's diet by attempting to mimic or equal the rheologic and/or organoleptic/physicochemical properties of the traditional animal-milk-based products.

In some embodiments, "substitute dairy food products", "substitute dairy food compositions", "hybrid substitute dairy food product", and the like, refers to products that comprise combinations of ingredients that are originated from animal milk and those that are not, including in some embodiments where the product is substantially, e.g. 90-99%, animal free. In some aspects, a hybrid dairy food product can have a ratio of dairy to plant/animal-free components can range from 0.1% to 99.9%. In some embodiments, such products can be a combination of animal-derived dairy food product and animal-free substitute dairy food products as defined herein, including for example a product combining animal-derived components and animal-free components resulting in a hybrid substitute dairy food product that is at least about 10% or more animal-free, or at least about 50% or more animal-free, or about 50-90% animal-free, or about 60-90% animal-free, or about 70-90% animal-free, or about 80-90% animal-free. Such products may replace animal-based products in one's diet by mimicking the rheologic and/or organoleptic/physicochemical properties of the traditional animal-milk-based products.

As used herein, an "Equivalent or substantially equivalent animal-derived dairy food product" refers to a dairy food product derived from an animal for which a substitute dairy food product is intended to mimic or replace.

Such products, including "substitute dairy food product", "animal-free substitute dairy food product", and the like, can include cheese substitutes or cheese analogues, for example, that have at least one property of corresponding animal-based product, e.g. animal-based cheese, including but not limited to appearance, glossiness, consistency, structure, thickness, taste, flavor and firmness (as measured by penetration or compression tests). According to some embodiments, the substitute dairy food products, including but not limited to cheese analogues, of the present disclosure have 2, 3, 4, 5, 6, 7 or 8 properties of corresponding animal-based dairy products. Such desired properties include but are not limited to: appearance, color, haptics, consistency, texture, firmness, hardness, viscoelastic properties, elasticity, cohesiveness, stickiness, stretch, creaminess, mouth feeling, inner structure (holes, imperfections), meltability, flavor, aroma, and taste.

In the context of the present disclosure, when referring to "non-animal" and "animal-free" products it is to be understood as encompassing a product that is entirely free of animal-derived components, such as caseins, beta-lactoglobolin (BLG) or other milk proteins, and/or animal lipids. All proteins and/or fats of such a product are recombinantly -produced or produced by other synthetic or ex vivo means, or derived from non-animal sources, e.g. plants.

As used herein the term "milk" includes fat-free milk, low fat milk, full fat milk, milk that is enriched in fat content by blending with cream, lactose-free milk (produced by hydrolyzing the lactose by lactase enzyme to glucose and galactose, or other method), concentrated milk or dry milk. Fat-free milk is nonfat or skim milk product. Low-fat milk is typically defined as milk that contains from about 1% to about 2% fat. Full fat milk often contains about 3.25% fat. As used herein, the term "milk" is also intended to encompass milks from animal and plant sources. Animal sources of milk include, but are not limited to, human, cow, sheep, goat, buffalo, camel, llama, mare and deer. Plant sources of milk include, but are not limited to, milk extracted from soy bean, almond, nuts, seeds and legumes. In addition, the term "milk" refers to not only whole milk, but also skim milk or any liquid component derived therefrom.

By "whey" is meant the milk component remaining after all or a substantial portion of the milk fat and casein contained in milk are removed.

Milk such as cow's milk is rich in minerals such as calcium and high-quality protein, and is a highly nutritious food product. As a result, it is not only used for direct consumption, but is also widely used as a raw material for all manner of so-called dairy products such as yoghurt and cheese, as a flavor improver for bread and baked sweets, as a raw material for other beverages, and as a material for all manner of processed foodstuffs such as infant formula.

Milk products constitute a significant portion of the overall diet or calorie consumption of human beings. As such, milk products play a major role in maintaining the health of the public. Nutritionally optimal milk products will have a positive effect on the nutrition and the health of the public. Concentration of macronutrients in any given milk product will often depend on the nature of the product and the desirable profile developed by the manufacturer.

For example, bovine milk contains about 87% water, 3.0% to 3.8% total protein, 0.5 to 0.7% whey protein, 4.5% to 5.0% lactose, 3% to 4% milk fat, 0.3% to 0.7% mineral salt plus a variety of water and fat soluble vitamins, citric acids, urea, free amino acids and polypeptides. One or more of these components may be separated from milk to produce various compositions. For example, in the manufacture of cottage cheese or casein, milk fat is first separated centrifugally (as cream) and the casein fraction of the milk is then precipitated at its isoelectric point by the addition of acid. The remainder of the original milk, containing all of the other components listed above, is called whey i.e., milk, from which the casein and a majority of the milk fat has been removed is referred to as whey.
Whey in turn can be subjected to filtration to produce a retentate and permeate that can be incorporated into a food product, like a beverage or dry food.

The terms "salt" refers to sodium chloride (NaCl). Salt can be used in the disclosed methods and compositions as an ingredient used in the same way as in regular cheese production (added for taste, microbial safety, and texture modifications). Salt can be added directly (dry salting) or via brining in a salt bath. Additionally, in some embodiments other salts can include salts of a mineral selected from the group consisting of calcium, sodium, magnesium, phosphorus, potassium, selenium, and zinc.

The term "coagulation" or "coagulated" has the meaning of a solidification process in which proteins (and optionally lipids) are made to stick together as a discontinuous phase, thereby becoming separated from their original liquid continuous phase. Typically, denaturation refers to partial unfolding of proteins, e.g. BLG, while aggregation involves very small particles (dimers, octamers), small soluble primary aggregates, as well as large, insoluble particulates. Coagulation refers to interactions between primary aggregates that result in precipitation or formation of a continuous gel network.

The terms "substantially devoid", "essentially devoid", "devoid", "does not include" and "does not comprise" may be used interchangeably and refer to a composition or product that does not include, contain, or comprise a particular component, e.g., the composition comprises less than 0.05 wt%, 0.02 wt%, 0.01 wt%, or less than 0.001 wt% of the component. In some embodiments, the term "devoid" contemplates a composition comprising traces of the devoid component such as traces of a component used in the purification process.

The terms "homogenized", and "homogenization" refer to the process or to the product that passed the process of homogenization. The homogenization may be affected by any known method and device. According to some embodiments, the homogenization is performed in multiple stages, e.g. 1, 2, 3 or 4 stages. According to the principles of the present invention, any homogenization stage and any homogenization pressure found to homogenize the compositions and products of the present invention are included.

The terms "lipid", "fat" and "oil" include any edible lipid. According to some embodiments, the lipid is a non-animal lipid. According to some embodiment, the lipid is plant-derived lipid. In some embodiments where "animal-free" is of less importance an animal fat can be used. According to some embodiments, the edible lipids comprise an oil. According to some embodiment, the oil is selected from the group consisting of shea oil, sunflower oil, coconut oil, rapeseed oil, nut oil, palm oil, kernel oil, olive oil, soya oil, cotton oil, and cocoa butter. The fats and oils can be native, crude, fractionated, unfractionated, and/or hardened (hydrogenated). Blends of two or more lipids can be applied.

The term "lipid" as used herein refers to an organic compound that is soluble in nonpolar solvents (such as ether and chloroform) and are relatively or completely insoluble in water. Non-limiting examples of lipids include glycerolipids (e.g., monoglycerides, diglycerides, triglycerides, neutral fats, phosphoglycerides, glycerophospholipids), nonglycerides (e.g., sphingolipids, sterol lipids [e.g., cholesterol, steroid hormones), prenol lipids [e.g., terpenoids], fatty alcohols, fatty acids, waxes, polyketides), and complex lipid derivatives (e.g., sugar-linked lipids, glycolipids, protein-linked lipids).

The terms "protein", "protein content", "protein concentration" and "total milk-protein content" refers to the content of all proteins, milk proteins and/or recombinant proteins in the compositions and methods herein, including the resulting substitute dairy food products. In the context of the present disclosure, when referring to "milk protein" it is to be understood as meaning proteins present in milk, yet, not necessarily isolated or derived from milk, i.e. animal-free milk protein substitutes such as recombinant proteins, including recombinant casein and recombinant BLG (rBLG). In certain embodiments, the term "milk protein" refers to BLG, alpha-lactalbumin (ALA), caseins, as 1 casein, aS2 casein, beta casein, and kappa casein, including recombinantly produced versions thereof.

The term "acidification" refers to the process of reducing the pH of the composition. According to some embodiments, acidification may be affected by any known method. Acidification can be carried out using glucono-delta-lactone (GDL), Lactic Acid Bacteria (LAB), or by using a cheese culture. The LAB bacteria can be a mixed-strain or defined-strain cultures. In some examples, the bacteria culture is mesophilic. In some other examples, the bacteria culture is thermophilic. Typical cultures comprise the species lactococcus, streptococcus, lactobacillus, leuconostoc, bifidobacterium, propionibacterium, brevibacterium. Acidification may be carried out by adding an acid, e.g. lactic, citric, acetic, malic acid or any other food grade acidulant.

As used herein, "hardness" or "firmness" is defined as a measure of the resistance to deformation, such as an indentation, induced mechanically by pressing.. Hardness or firmness testing loads can be expressed in any suitable unit, as would be appreciated by one of ordinary skill in the art, including for example in Newtons (N).

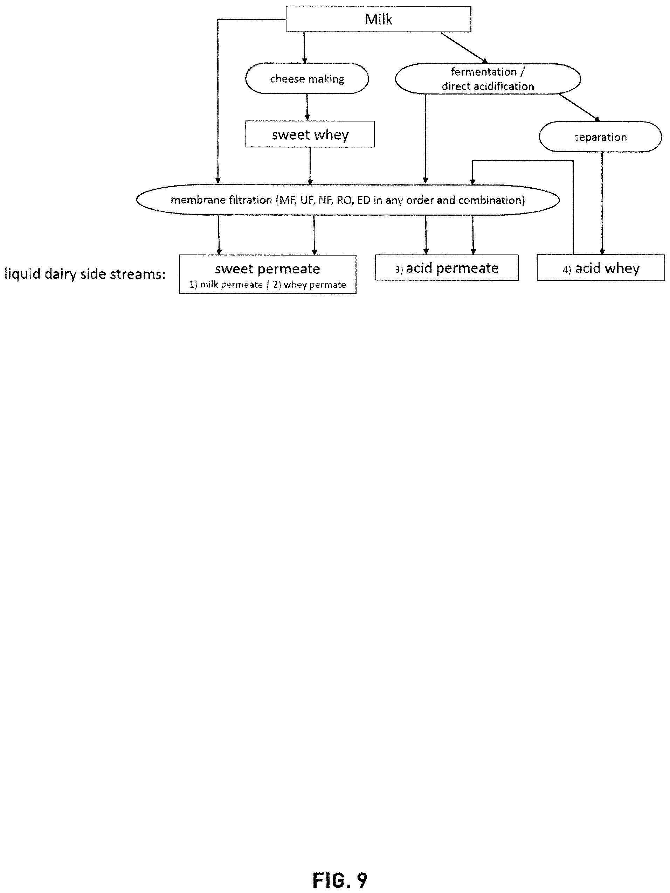

As used herein, a "liquid dairy side stream" refers to a dairy ingredient that is essentially free of milk protein and milk fat, and comprises permeate(s) derived from: 1) milk, 2) sweet whey, 3) directly acidified or fermented milk or acid whey (acid permeate), or 4) acid whey directly from the production of fresh cheese, skyr, greek yoghurt and the like. Figure 9 is a schematic illustration of these liquid dairy side streams. That is, a liquid dairy side stream can refer to permeates that are a by-product of milk processing (as defined below), as well as acid whey (as defined below) that results from the production of fresh cheese, skyr, greek yoghurt and the like. An overview of the composition of various dairy side streams is given for example by REITMAIER AND KULOZIK (2022): Compositional analysis of dairy side streams and assessment of their applicability as diafiltration media. International Journal of Dairy Technology. Vol 75, 3, which is incorporated herein in its entirety.

A "milk permeate", including a permeate derived from animal milk or mammalian milk, refers to a dairy ingredient that is a by-product of the milk protein concentrate (MPC) or milk protein isolate (MPI) production process. A "whey permeate" refers to a dairy ingredient that is a by-product of the whey protein concentrate (WPC) or whey protein isolate (WPI) production process. In some embodiments, a permeate is made by filtering milk or whey through a fine membrane, or sieve, in a process called ultrafiltration (UF). This process separates components of the milk, including for example the water, lactose, vitamins, and minerals from the milk's protein and fat. The ratio of these components in the permeate can further be adjusted and tailored by other known separation and concentration technologies in any combination and order, like microfiltration (MF), nanofiltration (NF), reversed osmosis (RO), forward osmosis, ion exchange (IE) or electrodialysis (ED). For example, lactose can be separated from minerals by NF (as described for example in EP3609337B1), demineralization can be carried out by IE or ED, and water can be removed by RO, thereby increasing the total solids content. As disclosed herein, these permeates have been found to be useful in making substitute or hybrid dairy food products. In some aspects, such permeates include valuable components, including but not limited to water, sugar (mainly lactose), minerals (e.g. calcium, phosphate, potassium, magnesium, iodine), vitamins (e.g. B2, B6, B12), peptides, amino acids and/or organic acids (e.g. citric acid, lactic acid). In some aspects, a permeate refers to a "sweet permeate" and/or an "acid permeate." A "sweet permeate" refers to a permeate with a pH in the range 5.5 to 7.5, including for example a UF-permeate, derived from skim milk or sweet whey. In some embodiments, an "acid permeate" with a pH in the range 3.0 to 5.5 refers to a permeate, including for example a UF-permeate, derived from fermented milk, directly acidified milk or acid whey. The terms permeate, dairy permeate, milk permeate or UF-permeate may be used interchangeably and generally refer to a liquid initially derived from mammalian milk, in which the proteins and fat have been removed. Typically, in cheesemaking for example, the milk protein and fat are separated by rennet coagulation and whey separation to make cheese or some other dairy product. After separation of the whey proteins by ultrafiltration, the left over permeate is often being discarded or considered a by-product.

Acid whey, at least when produced as a by-product from the production of Greek yogurt, quark, cottage cheese, skyr, and the like, can also be considered as a suitable liquid dairy side stream essentially free of milk proteins and milk fat. That is because in most industrial processes, the skimmed milk is heated to over 90°C, which causes most of the whey proteins to become denatured and bound to the caseins, i.e. they are captured in the fresh cheese products and are not transferred to the acid whey. A current review on acid whey is given by ROCHA-MENDOZA et al. (2021): Invited review: Acid whey trends and health benefits. J. Dairy Sci. 104:1262-1275, which is hereby incorporated by reference in its entirety.

The term "non-animal" as used herein refers to a component (e.g., protein, lipid, carbohydrate) that is not native to an animal cell.

The term "produced recombinantly", or variants thereof, as used herein in reference to a component (e.g., a protein, a lipid) refers to a component that is produced in a cell of a different species or type as compared to the species or type of cell that produces the component in nature (e.g., a recombinant host cell), or that is produced in a cell at a level at which it is not produced in nature, or that is produced using a recombinant polynucleotide.

The term "recombinant lipid" or "recombinant fat" as used herein refers to a lipid, a fat, or a milk lipid that is produced recombinantly.

### II. Methods of making dairy food substitute food products using liquid dairy side streams

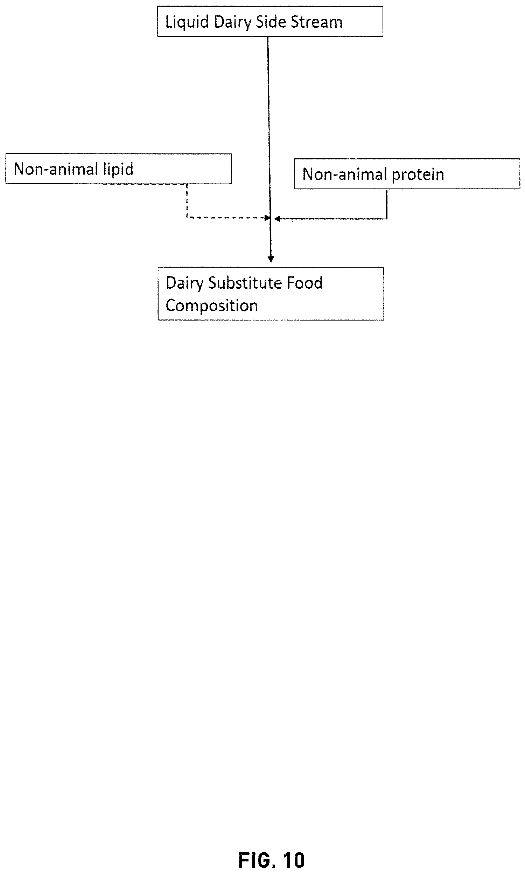

Disclosed herein are methods for the production of alternative or substitute dairy products from recombinant milk proteins and/or plant proteins (also known as vegetable proteins - i.e. non-animal proteins), plant fats/lipids (also known as vegetable fats/lipids - i.e. non-animal lipids) and liquid dairy side streams such as acid whey, milk permeates or whey permeates. These liquid dairy side streams, which include water, some lactose, minerals and vitamins, from the milk are recycled to prepare the alternative cheese base. As shown in FIG. 10, these liquid diary side streams can be combined with a non-animal protein, and optionally a non-animal lipid, to arrive at a dairy substitute food composition.

Currently, non-animal cheese products made from alternative proteins must be dispersed in large amounts of water and do not contain the valuable ingredients of milk. When using caseins, the protein functionality depends largely on the mineral composition. Minerals, and hydrocolloids (starches, stabilizers) need to be added, resulting in a long ingredient list.

Moreover, alternative protein powders (i.e. non-animal proteins or recombinant milk proteins) often do not contain sufficient nutrients (sugars, minerals, nitrogen, trace elements) that lactic acid bacteria and cheese cultures need for fermentation and ripening processes.

In current dairy food production, including cheese production, a significant portion of the milk used in such production processes is left over as whey permeate. For example, 1,000 kg of whole milk will typically yield only about 100 kg of cheese, with the remainder, about 900 kg, remaining as whey. This significant quantity of whey, of which about 77% is whey permeate after separation of a whey protein concentrate and a lactose concentrate, is considered a by-product, some of which having limited value.

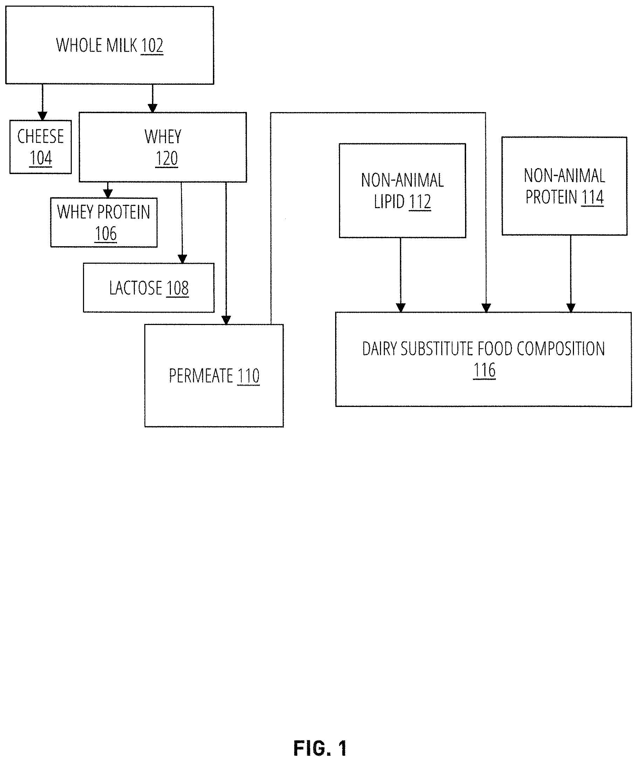

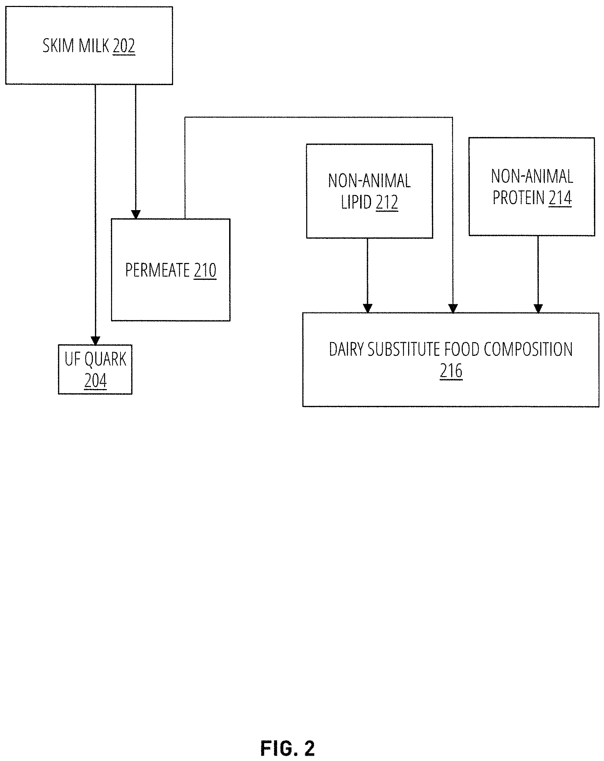

To elaborate further, FIG. 1 and FIG. 2 illustrate the yield of Permeate 110/ Permeate 210. In FIG. 1 Whole Milk 102 is processed to make Cheese 104 with resultant Whey 120. Whey 120 can include by-products Whey Protein 106, Lactose 108 and Permeate 110. Permeate 110 often represents a significant portion of the initial portion of Whole Milk 102, e.g. at least 50% and up to 80%. For context, and continuing with the example in the above paragraph, if 900 kg of the original 1,000 kg of whole milk is whey, of that 900 kg about 50 kg is whey protein (e.g. separated by ultrafiltration as a whey protein concentrate) and about 150 kg is lactose (e.g. separated by nanofiltration and/or crystallization as a lactose concentrate). The remainder of the 900 kg of whey, or about 700 kg, is whey permeate. Unfortunately, finding viable uses for this large quantity of by-product, i.e. whey permeate, has been a challenge.

Likewise, in FIG. 2, Skim Milk 202 can be processed to form UF Quark or Greek Yoghurt 204 and by-product Permeate 210. Here again, Permeate 210 represents a significant portion of the original Skim Milk 202. Quark is non-fat fresh cheese that is concentrated by ultrafiltration resulting in acid permeate as by-product. An alternative product is separator quark. Here, the fresh cheese is concentrated by a centrifugal separator resulting in acid whey, which still contains a small portion of fat and whey proteins.

In both FIG. 1 and FIG. 2, Permeate 110 and Permeate 210, respectively, can be generated using ultrafiltration to remove the desired components, e.g. whey protein and some lactose, and to form the desired product, e.g. cheese. Regardless, the same problem persists in that a significant quantity of permeate remains with no useful purpose.

Taken together, the present disclosure addresses these issues, and provides a new approach to producing a substitute dairy product that utilizes an otherwise low value by-product, i.e. liquid dairy side streams, including for example whey permeate. In some embodiments, an alternative protein or non-animal protein, e.g. a recombinant casein, and a non-animal lipid, e.g. a plant fat, are mixed directly into a whey permeate. The composition of this permeate can be specifically adjusted using membrane separation processes (nanofiltration) so that valuable ingredients from the milk can be provided in the optimal ratio (e.g. lactose for dairy cultures, calcium and phosphate for casein functionality, B vitamins for human nutrition).

By utilizing this new approach water consumption is significantly reduced and the liquid dairy side streams are converted into a high-quality end product. Since the final product is not 100% animal-free, other milk-based ingredients could also be added (e.g. natural flavors made from milk or cream, cheese cultures, phospholipids from buttermilk). Nevertheless, even though a declaration of "vegan", "cow-free" or "non-animal" is not possible, the product is still essentially "free of animal fat" and essentially "free of animal protein".

Thus, provided herein is a new method of producing an alternative cheese product from recombinant milk proteins or plant proteins, plant fat and liquid dairy side streams. Water, some lactose, minerals and vitamins from milk are recycled via the liquid dairy side stream to make the alternative cheese base.

Several advantages are provided by this approach. For example, utilizing the side streams from traditional cheese and dairy product processes provides nutrients (lactose, minerals, peptides, nitrogen, trace elements) for cheese cultures to enable fermentation and ripening processes. Additionally, the liquid dairy side streams used can provide minerals (calcium, phosphate, citrate) to assemble functional protein structures (e.g., casein micelles) from recombinant casein fractions and/or plant proteins. Moreover, use of the liquid dairy side stream can provide dairy components, which are essential for human nutrition (vitamin B2, vitamin B12, calcium, zinc). The resultant alternative or substitute dairy food product includes only natural ingredients, with a short ingredient list that is advantageous from a labeling and marketing standpoint. Finally, the re-utilization of side streams from regular cheese production provides a circular economy that is more efficient and cost-effective.

Importantly, using the disclosed methods allows for the resulting substitute dairy food products to have the same or substantially the same organoleptic and/or rheologic properties as the dairy food product to which they are analogues, whether by virtue of the production process and/or by the addition of supplemental nutrients during the production process. Therefore, the substitute dairy food products and methods of making the same are intended in some embodiments to substantially mimic their corresponding traditional and/or animal-derived dairy food products.

Thus, disclosed herein in one aspect is a dairy substitute food composition, the composition comprising a non-animal protein, and a liquid dairy side stream, the liquid dairy side stream being derived from mammalian milk, the liquid dairy side stream comprising water, sugar, and minerals (optionally also vitamins and organic acids).

In some aspects, the sugar can be lactose from milk, with some galactose and glucose (sub components from lactose). In some aspects, the lactose can be hydrolyzed by lactase enzyme to glucose and galactose, or polymerized to galactooligosaccharides (GOS). In some aspects, sugar can be added in addition to naturally occurring sugar, i.e. lactose.

In some aspects, the non-animal protein comprises any protein or protein source not derived from an animal or animal source, or a combination of two or more non-animal proteins, e.g. a recombinant protein and a plant protein.

In some aspects, the non-animal protein can include a recombinant protein, a plant protein or any suitable protein not derived from an animal or animal source. The recombinant protein can be produced by precision fermentation using genetically engineered bacteria, yeast, filamentous fungi or other suitable microorganisms. Precision fermentation combines the process of traditional fermentation with the latest advances in biotechnology to efficiently produce a compound of interest, such as a protein. A specific molecular sequence is inserted into a microorganism to give it instructions to produce the desired molecule when fermented. These molecular sequences are derived from digitized databases rather than taken directly from the relevant animals or plants. The modified microorganisms are cultivated in a specific fermentation medium at optimized conditions for the production of the target protein. At the end of the fermentation process, the resulting compounds are filtered out, separating them from the microorganisms that produced them. Any liquid dairy side stream such as whey or milk permeate or acid whey as previously defined can be used as fermentation medium for culturing these microorganisms and producing the recombinant protein. In this case, the recombinant protein preparation would not be considered completely animal-free, as the fermentation took place in a dairy medium. A lower purification level and hence lower production costs might be required with this approach, as some components of the dairy side stream used as fermentation medium could be used in the finished product. In some aspects, the recombinant protein comprises a recombinant casein. The recombinant casein comprises alphaS 1, alpha S2, beta and kappa casein with any levels and any type of posttranslational modifications, e.g. phosphorylation or glycosylation. In some aspects, the recombinant protein can be a recombinant beta-lactoglobulin (rBLG). Methods for producing recombinant milk proteins are disclosed in U.S. Patent 9,924,728, issued March 27, 2018; U.S. publication US20190216106, published July 18, 2019; and PCT publication WO2019213155, published November 7, 2019; which are hereby incorporated herein in their entireties.

In some aspects where a plant protein is used, such a plant protein can include proteins derived from soy, peas, legumes, almonds, nuts, chickpeas, beans, lentils, cereals, seeds, hemp, potato, chinoa, amaranth, rapeseed, sunflower, alfalfa, clover, kidney bean, fava bean, lupin, cocoa, carob, nut, peanut, rye, cereal, whole wheat, rice, hemp, wheat gluten, a protein concentrate thereof, a protein isolate thereof, a hydrolysate thereof, or any combination of any two or more of these. Other non-animal proteins can be derived from fungi, yeast or algae.

The dairy substitute food compositions may also include any suitable concentration or amount of protein, including but not limited to about 3% to about 40% protein, optionally about 10% to about 25% protein, or optionally about 3%, about 4%, about 5%, about 6%, about 7%, about 8%, about 9%, about 10%, about 11%, about 12%, about 13%, about 14%, about 15%, about 16%, about 17%, about 18%, about 19%, about 20%, about 21%, about 22%, about 23%, about 24%, about 25%, about 26%, about 27%, about 28%, about 29%, about 30%, about 31%, about 32%, about 33%, about 34%, about 35%, about 36%, about 37%, about 38%, about 39%, or about 40% protein.

The dairy substitute food composition may also further comprise a lipid or fat, including for example a non-animal lipid. In some aspects, the non-animal lipid can comprise a plant fat, or any other lipid or fat source not derived from an animal or animal source. Additionally, in some aspects, the lipid or fat can comprise a recombinant fat/lipid or synthetic fat/lipid. Methods for producing recombinant fats and lipids are disclosed in PCT publication WO2021/050759; which is hereby incorporated herein in its entirety.

By way of example, and not limitation, such plant fats can include a seed oil, a rapeseed oil, a palm oil, shea oil, sunflower oil, coconut oil, nut oil, kernel oil, olive oil, soya oil, cotton oil, and cocoa butter. Other non-animal lipids that are not directly derived from plants might be used as well, e.g. fats and oils with synthetic fatty acid produced from CO2 and clean energy. Any suitable amount of lipid or fat can be included, although in some embodiments an ideal amount will be that which most closely mimics one or more properties of a traditional dairy food composition. For example, the dairy substitute food composition can include about 0.2% to about 40% lipid, preferably about 5% to about 30% lipid, and optionally about 0.2%, about 0.3%, about 0.4%, about 0.5%, about 0.6%, about 0.7%, about 0.8%, about 0.9%, about 1%, about 2%, about 3%, about 4%, about 5%, about 6%, about 7%, about 8%, about 9%, about 10%, about 11%, about 12%, about 13%, about 14%, about 15%, about 16%, about 17%, about 18%, about 19%, about 20%, about 21%, about 22%, about 23%, about 24%, about 25%, about 26%, about 27%, about 28%, about 29%, about 30%, about 31%, about 32%, about 33%, about 34%, about 35%, about 36%, about 37%, about 38%, about 39%, or about 40% lipid.

In some embodiments, the dairy substitute food compositions include a liquid dairy side stream, including but not limited to a whey permeate, a sweet milk permeate, a sour milk permeate an/or acid whey. A whey permeate can be produced when the casein is coagulated and separated during cheesemaking either by renneting and/or acidification. The resulting whey is ultrafiltered to concentrate the whey protein leaving the whey permeate as a by-product. A sweet milk permeate can be produced when skim milk is directly ultrafiltered to create a milk protein concentrate with the deproteinized milk permeate as by-product. Optionally, a microfiltration step can be conducted first in order to separate caseins from whey proteins. A sour milk permeate can be produced when fermented skim milk is concentrated with ultrafiltration to produce fresh cheese, skyr, greek yoghurt and the like. The resulting sour milk permeate has a low pH (approx 4.5), a lower lactose content (partly broken down to lactic acid) and a higher calcium and phosphate content compared to sweet permeate. In all types of permeates, the lactose and mineral composition could be further adjusted by additional filtration steps (nanofiltration, reversed osmosis). To produce cheese substitutes, one could for instance reduce the lactose content and increase the potassium and calcium content by nanofiltration.

As discussed herein, in some embodiments, acid whey can be used in the production of substitute dairy food compositions. In some aspects, when using acid whey, it may not be necessary to remove proteins and fat through ultrafiltration to create a whey permeate. That is because in some industrial processes (used to make Greek yogurt, quark, cottage cheese, skyr, and the like), the skimmed milk is heated to over 90°C, which causes most of the whey proteins to become denatured and bound to the caseins, i.e. they are captured in the fresh cheese products and are not transferred to the acid whey. Therefore, acid whey, at least when produced as a by-product from the production of Greek yogurt, quark, cottage cheese, skyr, and the like, typically has a very low protein and fat content (less than 0.5%, i.e. substantially free of protein and fat/lipid). In some applications further ultrafiltration facilities are used to produce an acid whey protein concentrate from this remaining acid whey, but often times the acid whey is simply discarded as by-product. Therefore, in some embodiments, an acid whey derived as such could be used in the disclosed methods to produce a substitute dairy composition and/or hybrid dairy product.

Thus, in this context, provided are dairy substitute food compositions and methods of making the same, where the permeate or whey source is an acid whey or sour whey as described above. Thus, in such embodiments, provided are dairy substitute food compositions comprising a non-animal protein, and an acid whey source, the acid whey source being a by-product of cheese making from mammalian milk, the acid whey source comprising water, sugar and minerals and less than 0.5% protein and less than 0.2% fat.

In some embodiments, the dairy substitute food compositions include a permeate source wherein the permeate source is a whey permeate. A whey permeate can be a by-product of traditional cheese making from mammalian milk. In some aspects, the permeate source, including a whey permeate, can include a permeate from skim milk (e.g. a sweet milk permeate), the permeate from skim milk comprising about 1% to about 10% total solids, about 0.01% w/w to about 0.1% w/w sodium, about 1% w/w to about 10% w/w lactose, about 0.05% w/w to about 0.5% w/w potassium, about 0.01% w/w to about 0.1% w/w calcium, and optionally about 100-200 µg/100g riboflavin vitamin B2. The dairy substitute food composition may also include a permeate source that is a permeate from directly acidified or fermented milk (e.g. a sour milk permeate), the permeate from directly acidified or fermented milk comprising about 1% to about 10% total solids, about 0.01% w/w to about 0.1% w/w sodium, about 1% w/w to about 10% w/w lactose, about 0.05% w/w to about 0.5% w/w potassium, about 0.05% w/w to about 0.5% w/w calcium, and optionally about 100-200 µg/100g riboflavin vitamin B2. The dairy substitute food composition may also include where the permeate source includes a by-product of cheese making from mammalian milk produced by a filtration of mammalian milk or whey to remove and/or separate milk protein and milk fat, i.e. to make a permeate free or substantially free of animal proteins and/or fats (milk proteins and/or milk fats). By way of example and not limitation, permeates can be produced by ultrafiltration, microfiltration, nanofiltration, reverse osmosis or any combination thereof.

The dairy substitute food composition may also include where the permeate further includes vitamins and organic acids. Such vitamins can include, for example but not limited to, water soluble vitamins thiamin (vitamin B1), riboflavin (vitamin B2), niacin (vitamin B3), pantothenic acid (vitamin B5), vitamin B6 (pyridoxine), vitamin B12 (cobalamin), vitamin C, and folate. Additionally, the permeate can include thiamin, riboflavin and vitamin B12 . The permeate can also include, even if in small amounts, niacin, pantothenic acid, vitamin B6, vitamin C, and folate. Fat soluble vitamins in the permeate can include vitamins A, D, E, and K. In some embodiments, the content level of fat soluble vitamins can depend on the fat content of the product or milk source. Finally, the organic acids in the permeate can include, but are not limited to, lactic acid, citric acid, and/or orotic acid.

In some embodiments, the disclosed dairy substitute food compositions can comprise a cheese, a cheese analog or a cheese-like substance. Such a cheese can include, but is not limited to, a semi-hard and/or hard cheese, a white cheese or a soft cheese (or analogs thereof) or a fresh cheese or cream cheese.

The dairy substitute food composition may be considered to be substantially free of an animal protein and/or substantially free of an animal lipid given that they are made from non-animal proteins and non-animal lipids. In some embodiments, substantially free of animal protein means 90-99% free of animal protein. In some embodiments, substantially free of animal lipid/fat means 90-99% free of animal lipid/fat.

The dairy substitute food compositions, can in some embodiments, also include one or more additional components selected from the group consisting of a cheese culture, an enzyme (e.g. lipases and proteases), salt, a hydrocolloid (e.g. starch or stabilizers), a herb, a spice, a flavoring agent, a coloring agent, and combinations thereof.

Methods of making such products, e.g. dairy substitute food compositions, are also provided. A method of producing a dairy substitute food composition can include providing a non-animal protein, optionally providing a non-animal lipid, providing a liquid dairy side stream, the liquid dairy side stream being derived from mammalian milk, the liquid dairy side stream comprising water, sugar, and minerals, and optionally vitamins and organic acids, and mixing and dispersing the non-animal protein and the non-animal lipid with the liquid dairy side stream to obtain a base composition for the dairy substitute food composition.

The method may also include where the non-animal protein includes a recombinant protein. The method may also include where the non-animal protein includes a plant protein. The method may also include where the non-animal protein includes any protein or protein source not derived from an animal or animal source, or a combination of two or more non-animal proteins, e.g. a recombinant protein and a plant protein. The method may also include where the dairy substitute food composition includes about 3% to about 40% protein, optionally about 10% to about 25% protein, or optionally about 3%, about 4%, about 5%, about 6%, about 7%, about 8%, about 9%, about 10%, about 11%, about 12%, about 13%, about 14%, about 15%, about 16%, about 17%, about 18%, about 19%, about 20%, about 21%, about 22%, about 23%, about 24%, about 25%, about 26%, about 27%, about 28%, about 29%, about 30%, about 31%, about 32%, about 33%, about 34%, about 35%, about 36%, about 37%, about 38%, about 39%, or about 40% protein.

The method may also include further comprising providing a non-animal lipid and mixing and dispersing the non-animal lipid with the non-animal protein and liquid dairy side stream. In some aspects, the non-animal lipid can comprise a plant fat, or any other lipid or fat source not derived from an animal or animal source. By way of example, and not limitation, such plant fats can include a seed oil, a rapeseed oil, a palm oil, shea oil, sunflower oil, coconut oil, nut oil, kernel oil, olive oil, soya oil, cotton oil, and cocoa butter. In some aspects, where the fat or lipid source is solid at room temperature, it is preferably melted before mixing with the other ingredients. In some preferred methods, the protein and lipid can be combined prior to mixing with the liquid dairy side stream.

Any suitable amount of lipid or fat can be included, although in some embodiments an ideal amount will be that which most closely mimics one or more properties of a traditional dairy food composition. The method may also include where the dairy substitute food composition includes about 0.2% to about 40% lipid, preferably about 5% to about 30% lipid, and optionally about 0.2%, about 0.3%, about 0.4%, about 0.5%, about 0.6%, about 0.7%, about 0.8%, about 0.9%, about 1%, about 2%, about 3%, about 4%, about 5%, about 6%, about 7%, about 8%, about 9%, about 10%, about 11%, about 12%, about 13%, about 14%, about 15%, about 16%, about 17%, about 18%, about 19%, about 20%, about 21%, about 22%, about 23%, about 24%, about 25%, about 26%, about 27%, about 28%, about 29%, about 30%, about 31%, about 32%, about 33%, about 34%, about 35%, about 36%, about 37%, about 38%, about 39%, or about 40% lipid.

The method may also include where the liquid dairy side stream includes a whey permeate, where the whey permeate is a by-product of cheese making from mammalian milk. The method may also include where the permeate source includes a permeate from skim milk (e.g. a sweet milk permeate), the permeate from skim milk comprising about 1% to about 10% total solids, about 0.01% w/w to about 0.1% w/w sodium, about 1% w/w to about 10% w/w lactose, about 0.05% w/w to about 0.2% w/w potassium, about 0.01% w/w to about 0.05% w/w calcium, and optionally about 100-200 µg/100g riboflavin vitamin B2. The method may also include where the permeate source includes a permeate from fermented milk (e.g. a sour milk permeate), the permeate from fermented milk comprising about 1% to about 10% total solids, about 0.01% w/w to about 0.1% w/w sodium, about 1% w/w to about 10% w/w lactose, about 0.05% w/w to about 0.2% w/w potassium, about 0.05% w/w to about 0.2% w/w calcium, and optionally about 100-200 µg/100g riboflavin vitamin B2.

The method may also include where liquid dairy side stream includes a by-product of cheese making from mammalian milk produced by a filtration of mammalian milk to remove and/or separate milk protein and milk fat.

The method may also include where the liquid dairy side stream further includes vitamins and organic acids. Such vitamins can include, for example but not limited to, water soluble vitamins thiamin (vitamin B1), riboflavin (vitamin B2), niacin (vitamin B3), pantothenic acid (vitamin B5), vitamin B6 (pyridoxine), vitamin B12 (cobalamin), vitamin C, and folate. Additionally, the liquid dairy side stream can include thiamin, riboflavin and vitamin B12 . The milk permeate can also include, even if in small amounts, niacin, pantothenic acid, vitamin B6, vitamin C, and folate. Fat soluble vitamins in the liquid dairy side stream can include vitamins A, D, E, and K. In some embodiments, the content level of fat soluble vitamins can depend on the fat content of the product or milk source. Finally, the organic acids in the liquid dairy side stream can include, but is not limited to, lactic acid, citric acid, and/or orotic acid.

Such a method is illustrated in FIG. 1. In the method of FIG. 1 Whole Milk 102 is processed to form a desired Cheese 104. In the process of producing Cheese 104 a significant portion of the original Whole Milk 102 is left over as Whey 120. When 120 includes Whey Protein 106, Lactose 108, which are usually separated out as value-added products, with the resultant by-product Permeate 110. Of note, in some embodiments, lactose 108 is not completely removed, and is instead a result of partial separation and/or partial removal. Based on the disclosed methods, this Permeate 110 is utilized to form Dairy substitute food composition 116 by combining the Permeate 110 with Non-animal protein 114, and optionally Non-Animal Lipid 112.

Likewise, a similar method is illustrated in FIG. 2 which starts with Skim Milk 202 that is processed to UF Quark, ( or non-fat fresh cheese, skyr, Greek yoghurt and the like) 204 and resultant by-product Permeate 210. Based on the disclosed methods, this Permeate 210 is utilized to form Dairy substitute food composition 216 by combining the Permeate 210 with Non-animal proteins 214 and optionally Non-Animal Lipid 212.

The method may also include further comprising adding one or more additional components selected from the group consisting of a cheese culture, an enzyme (e.g. lipases and proteases), salt, a hydrocolloid (e.g. starch or stabilizers), a herb, a spice, a flavoring agent, a coloring agent, and combinations thereof.

The method may also include where the base composition for the dairy substitute food composition includes a cheese substitute base, where further processing of the cheese substitute base provides a cheese substitute that is substantially free of an animal lipid and substantially free of an animal protein. For example, the cheese substitute base can be applied or added to a mold for forming and producing the resultant cheese substitute product. To elaborate, in some aspects a cheese substitute base can be directly filled (optionally while still hot or warm) into consumer packaging or to produce cheese slices with a cheese processor, e.g. Natec Network ^{®} process cheese technology, for slice on slice or individually wrapped slices. In other aspects, a cool substitute cheese base can be filled into molds, followed by optional addition of specific cultures and/or enzymes and a ripening/maturation process as in the production of traditional natural cheese.

To elaborate further, a first example of such further processing of the base composition includes a process cheese technology where the heated base composition including optional ingredients can be directly hot-filled into consumer packaging (e.g. plastic cups for spreads or aluminum foil for cheese wedges) or fed to equipment to produce cheese slices (slice on slice or individually wrapped slices), cubes, sticks or shreds. Such an equipment is available for example by Natec Network ^{®}.

Additionally, a second example of such further processing of the base composition includes a natural cheese technology where the heated base composition including optional ingredients can be cooled below the inactivation temperature of cheese cultures and/or enzymes and inoculated with cheese cultures and/or enzymes (e.g., by in-line dosing into the liquid base composition or through a needle injection system into the solidified cheese base), filled into cheese molds and subjected to a maturation process at specific temperatures and humidity conditions as used in traditional cheese making to produce the desired texture, taste and aroma. Optionally, brining can be performed in a salt bath.

The method may also further comprise processing the base composition to obtain a dairy substitute food composition that is substantially free of an animal fat and substantially free of an animal protein. In such methods, the dairy substitute food composition may be considered to be substantially free of an animal protein and/or substantially free of an animal lipid given that they are made from non-animal proteins and non-animal lipids. In some embodiments, substantially free of animal protein means 90-99% free of animal protein. In some embodiments, substantially free of animal lipid/fat means 90-99% free of animal lipid/fat. These results can be achieved using the disclosed methods.

Such methods can in some aspects provide a dairy substitute food composition that comprises a cheese, a cheese analog or a cheese-like substance. Such a cheese can include, but is not limited to, a semi-hard and/or hard cheese, a white cheese, a soft cheese, fresh cheese or cream cheese (or analogs thereof).

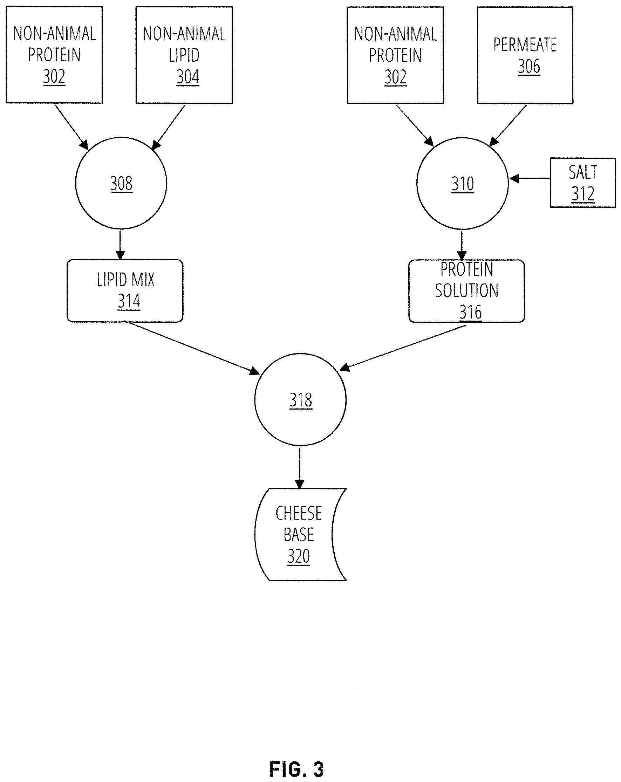

Further variations of the methods of FIG. 1 and FIG. 2 are also provided. For example, and as illustrated in FIG. 3, such a method may also include where a portion of the Non-animal protein 302 is mixed 308 with the Non-animal lipid 304 to form a first mixture, or Lipid mix 314, where a portion of the Non-animal protein 302 is mixed 310 with the Permeate 306 to form a second mixture, or Protein solution 316, where the Lipid mix 314 and Protein solution 316 are blended, heated and pH adjusted in step 318 to form the base composition, or Cheese base 320, for the dairy substitute food composition. The method may also include where the heating in step 318 includes heating at a temperature range of about 50°C to about 160°C, preferably about 60°C to about 90°C, optionally at about 50°C, about 51°C, about 52°C, about 53°C, about 54°C, about 55°C, about 56°C, about 57°C, about 58°C, about 59°C, about 60°C, about 61°C, about 62°C, about 63°C, about 64°C, about 65°C, about 66°C, about 67°C, about 68°C, about 69°C, about 70°C, about 71°C, about 72°C, about 73°C, about 74°C, about 75°C, about 76°C, about 77°C, about 78°C, about 79°C, about 80°C, about 81°C, about 82°C, about 83°C, about 84°C, about 85°C, about 86°C, about 87°C, about 88°C, about 89°C, about 90°C, about 91°C, about 92°C, about 93°C, about 94°C, about 95°C, about 96°C, about 97°C, about 98°C, about 99°C, about 100°C, about 101°C, about 102°C, about 103°C, about 104°C, about 105°C, about 106°C, about 107°C, about 108°C, about 109°C, about 110°C, about 111°C, about 112°C, about 113°C, about 114°C, about 115°C, about 116°C, about 117°C, about 118°C, about 119°C, about 120°C, about 121°C, about 122°C, about 123°C, about 124°C, about 125°C, about 126°C, about 127°C, about 128°C, about 129°C, about 130°C, about 131°C, about 132°C, about 133°C, about 134°C, about 135°C, about 136°C, about 137°C, about 138°C, about 139°C, about 140°C, about 141°C, about 142°C, about 143°C, about 144°C, about 145°C, about 146°C, about 147°C, about 148°C, about 149°C, about 150°C, about 151°C, about 152°C, about 153°C, about 154°C, about 155°C, about 156°C, about 157°C, about 158°C, about 159°C, or about 160°C . In some embodiments where recombinant caseins are used as the non-animal protein, the caseins can be very heat stable, such that use of ultra high temperatures (UHT), i.e. about 160°C, can be used to process the substitute dairy product. This treatment would kill bacterial spores and would improve food safety and shelf life considerably.

The method may also include where adjusting the pH of the Lipid mix 314 and/or Protein solution 316 in the formation of the base composition 320 includes adjusting to a pH of about 4.0 to about 6.5, preferably about 5.0 to about 6.0, optionally about 4.0, about 4.1, about 4.2, about 4.3, about 4.4, about 4.5, about 4.6, about 4.7, about 4.8, about 4.9, about 5.0, about 5.1, about 5.2, about 5.3, about 5.4, about 5.5, about 5.6, about 5.7, about 5.8, about 5.9, about 6.0, about 6.1, about 6.2, about 6.3, about 6.4, or about 6.5. The method may also include further comprising adding a salt 312 at step 310.

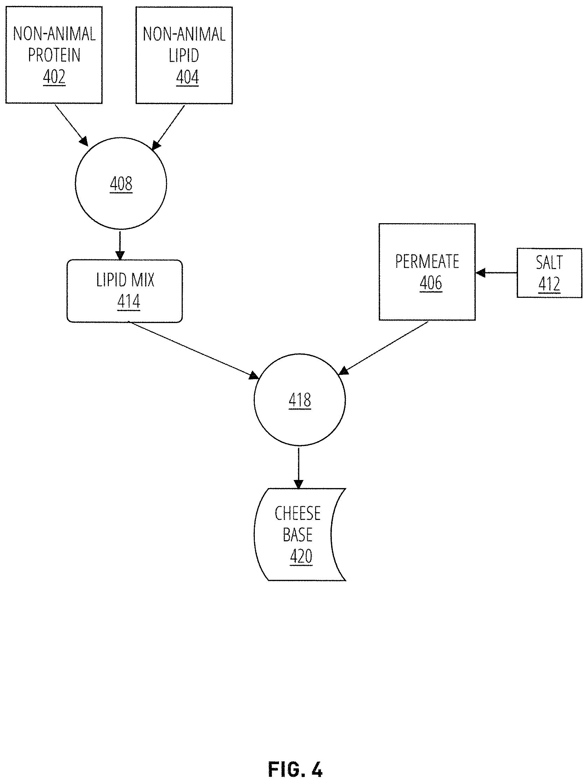

Further variations of the methods of FIG. 1 and FIG. 2 are also provided. For example, and as illustrated in FIG. 4, such a method may also include where the non-animal protein 402 is mixed 408 with the non-animal lipid 404 to form a Lipid mix 414, where the Lipid mix 414 is combined with the Permeate 406 and then blended, heated and pH adjusted in step 418 to form the base composition for the dairy substitute food composition, namely Cheese base 420. pH is typically adjusted to pH 4.0 to 6.5 (preferably pH 5.0 to 6.0). Heating typically is applied in the temperature range 50 - 120°C (preferably 60-90°C). The method may also include further comprising adding a salt 412 to the permeate source 406 prior to combining with the Lipid mix 414.

### Examples

The following examples are included to further illustrate various embodiments of the presently disclosed subject matter. However, those of ordinary skill in the art should, in light of the present disclosure, appreciate that many changes can be made in the specific embodiments which are disclosed and still obtain a like or similar result without departing from the spirit and scope of the presently disclosed subject matter.

### Example 1

### Cheese substitutes with recombinant alpha S1 casein and milk permeates from ultrafiltration.

### Material and Methods

### Raw materials:

The raw materials used included: recombinant alpha S1 casein powder (87.0% solids, 84.4% alpha S1 casein); plant fat (Rapeseed Blend); salt (NaCl); citric acid (50% solution w/w); and distilled water. The permeate used included either a sweet permeate or an acid permeate, both of which are exemplified in Table 1, and both of which were derived via UF. The sweet UF-permeate was derived from skim milk and the acid UF-permeate was derived from fermented milk.

**Table 1. Composition of permeates used in Example 1**

| In w/w % | **Sweet Permeate** | **Acid Permeate** |
|---|---|---|
| Total Solids | 5.8 | 5.3 |
| Sodium | 0.05 | 0.04 |
| Lactose | 4.9 | 4.2 |
| Potassium | 0.15 | 0.17 |
| Calcium | 0.03 | 0.13 |
| Riboflavin Vitamin B2 | 200 µg / 100 g | |

### Experimental Recipes:

Model cheeses were prepared representing compositions similar to soft mozzarella (15% casein, 20% fat) and semi-hard cheese (20% casein and 25% fat, or 25% casein and 30% fat), respectively. As an optional step, the pH-value was adjusted with citric acid.

Six different prototypes were produced as shown below in Table 2.

**Table 2.**

| **Sample number** | **protein % w/w** | **fat % w/w** | **aqueous phase** | **salt % w/w** | **pH-value** |
|---|---|---|---|---|---|
| **1** | 15 | 20 | water | 0.5 | 5.8 |
| **2** | 15 | 20 | sweet permeate | 0.5 | 5.6 |
| **3** | 15 | 20 | acid permeate | 0.5 | 5.9 |
| **4** | 20 | 25 | acid permeate | 1.0 | 5.8 |
| **5** | 25 | 30 | water | 1.0 | 6.1 |
| **6** | 25 | 30 | acid permeate | 1.0 | 5.8 |

As an example, the recipe for a mozzarella type cheese with acid permeate is shown in Table 3.

**Table 3. Experimental recipe for mozzarella type cheese**

| | alpha S1 casein | Plant Fat Rapeseed Blend | Salt | Citric Acid 50% | Acid UF-Permeate | **Model Cheese** |
|---|---|---|---|---|---|---|
| TS | 96.0 | 99.8 | 99.0 | 49.5 | 5.3 | **40.2** |
| Protein | 87.8 | 0.0 | 0.0 | 0.0 | 0.0 | **15.0** |
| Fat | 0.0 | 99.8 | 0.0 | 0.0 | 0.0 | **20.0** |
| **Dosage %** | **17.08** | **20.00** | **0.50** | **0.05** | **62.37** | **100.00** |

### Cheesemaking production process:

For samples 1 and 2 (mozzarella-type cheeses with 15% protein), 10% casein solutions were prepared with water or sweet permeate first, then 0.5% salt was added, and the mix was heated to 72°C (magnetic stirrer with heating plate) and cooled down to room temperature. The fat was melted at 60°C and then blended manually with the remaining casein to create a fat mix. Both mixes were combined, and the pH-value was optionally adjusted with citric acid. The complete cheese base was further stirred and heated to 60°C in a glass beaker until a homogeneous mass was formed.

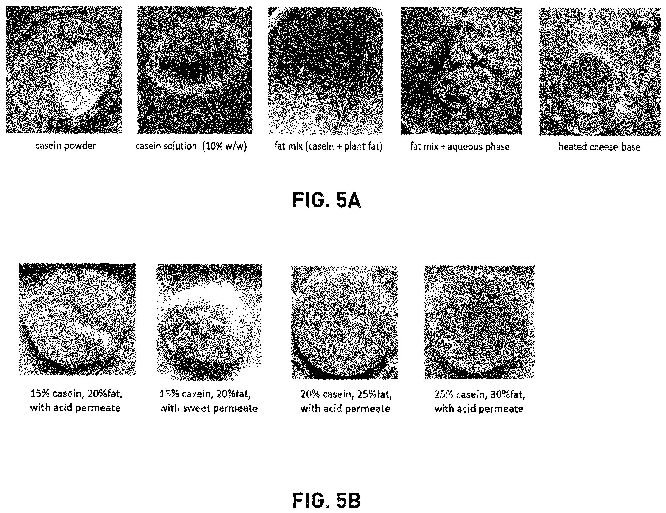

For all samples with acid permeate (samples 3, 4 and 6), the entire amount of casein was blended with the melted fat first, and acid permeate and salt were added afterwards. The same procedure was applied for sample 5 with 25% protein and water. The reason for this was that the casein powder was insoluble in acid permeate and it was difficult to prepare an aqueous casein solution with more than 10% due to the high viscosity. The process options are schematically depicted in FIG. 3 and FIG. 4. FIG. 5A shows photos of the intermediate materials. Finished model cheeses are shown in FIG. 5B.

### Viscoelastic and melting properties

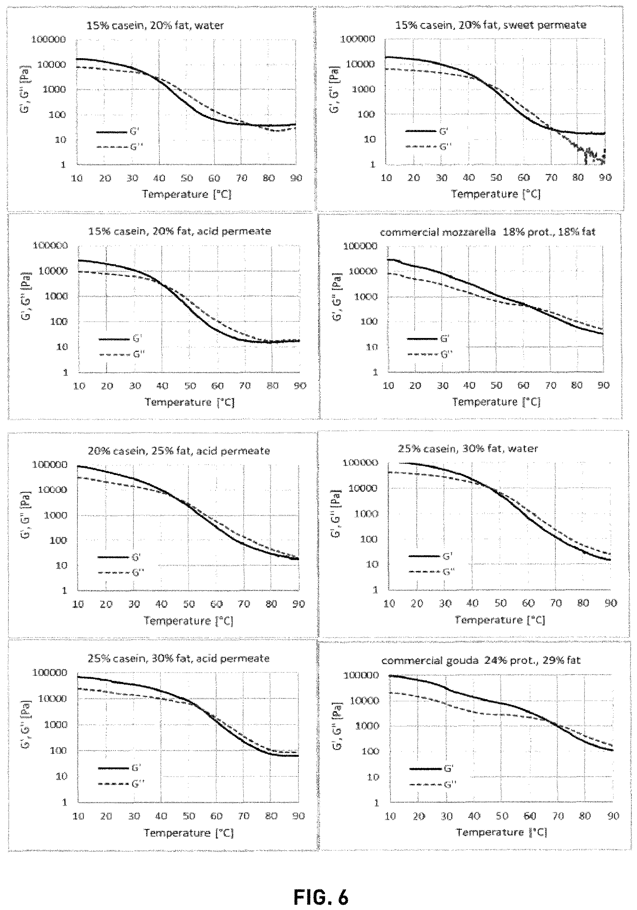

The viscoelastic and melting properties of model cheeses were determined by small amplitude oscillatory rheometry. A controlled-stress rheometer (Anton Paar MCR 302) was used with a 20-mm parallel plate geometry. For the test, round cheese slices were cut out with a diameter of 20 mm and a height of 2 mm to 3 mm. A temperature sweep was performed in the temperature range between 10°C and 90°C with a heating rate of 5°C/min, a frequency of 1 Hz and a deformation of 0.05%. The melting point was defined as the temperature at the cross-over point of storage and loss modulus (G'=G"). As references, a commercial soft mozzarella and a commercial gouda were evaluated as well. The measurement data is shown in Table 4. FIG. 6 shows the moduli G' and G" during temperature sweeps for different model cheeses and commercial products.

**Table 4. Measurement data for viscoelastic and melting properties**

| | | initial values at 10°C | | | crossover (melting point) | |
|---|---|---|---|---|---|---|
| | | G' [Pa] | G" [Pa] | tan δ ( G"/G') | G' = G" [Pa] | Temp [°C] |
| 1 | 15% protein, 20% fat, water | 16900 | 7800 | 0.46 | 3670 | 37 |
| 2 | 15% protein, 20% fat, sweet permeate | 19300 | 6600 | 0.34 | 2040 | 45 |
| 3 | 15% protein, 20% fat, acid permeate | 26200 | 9700 | 0.37 | 3150 | 40 |
| rm | ref. mozzarella 18% protein, 18% fat | 28500 | 8000 | 0.28 | 395 | 63 |
| 4 | 20% protein, 25% fat, acid permeate | 89000 | 31300 | 0.35 | 5240 | 45 |
| 5 | 25% protein, 30% fat, water | 114100 | 42800 | 0.38 | 10000 | 47 |
| 6 | 25% protein, 30% fat, acid permeate | 71900 | 24000 | 0.33 | 4150 | 54 |
| rg | ref. gouda, 24% protein, 29% fat | 90900 | 20350 | 0.22 | 1380 | 68 |

### Conclusions:

All model cheeses with recombinant alpha S1 casein and plant fat showed distinct softening and melting when heated. However, the gel-sol transition (cross-over of storage modulus and loss modulus) has generally been observed at lower temperatures compared to commercial cheeses made from bovine milk. For a given protein and fat content, the melting temperature of the model cheeses could be increased by replacing water with sweet or acid permeate.

The highest match of traditional cheeses in terms of viscoelastic and melting properties was achieved by sample 2 with sweet permeate (mozzarella type) and by sample 6 with acid permeate (semi-hard cheese type). The results show that the functional properties of cheese substitutes with a single fraction of recombinant casein can be manipulated and improved by the components present in dairy permeates (for example, but not limited to, calcium, phosphate, citrate, potassium, lactic acid, lactose, etc.).

### Example 2

### Analogue cheeses (mozzarella type) with sodium caseinate and milk permeates from ultrafiltration.

### Material and Methods

### Raw materials:

The raw materials used here include: Sodium Caseinate 91 % Protein; Plant Fat Palm and canola oil; salt; citric acid (50% solution w/w); calcium chloride (as solution of 10% Ca w/w); and distilled water. The permeate used included either a sweet permeate or a acid permeate, both of which are exemplified in Table 5, and both of which were derived via UF. Sweet UF-permeate was derived from skim milk and acid UF-permeate was derived from fermented milk.

**Table 5. Composition of permeates used in Example 2**

| In w/w % | **Sweet Permeate** | **Acid permeate** |
|---|---|---|
| Total Solids | 5.8 | 5.3 |
| Sodium | 0.05 | 0.04 |
| Lactose | 4.9 | 4.2 |
| Potassium | 0.15 | 0.17 |
| Calcium | 0.03 | 0.13 |
| Riboflavin Vitamin B2 | 200 µg / 100 g | |

### Experimental Recipes:

Three experimental recipes were tested, each of which is summarized in Tables 6A, 6B and 6C.

**Table 6A.**

| **Cheese with water** | Na-Caseinate | Plant Fat | Salt | Citric Acid 50% | CaCl2 (10%Ca solution) | Water | **Cheese** |
|---|---|---|---|---|---|---|---|
| TS | 95.10 | 99.80 | 99.00 | 49.50 | 27.30 | 0.00 | **42.2** |
| Protein | 91.00 | 0.00 | 0.00 | 0.00 | 0.00 | 0.00 | **20.0** |
| Fat | 0.50 | 99.80 | 0.00 | 0.00 | 0.00 | 0.00 | **20.1** |
| Calcium | 0.08 | 0.00 | 0.00 | 0.00 | 10.00 | 0.000 | **0.24** |
| Dosage% | **22.00%** | **20.00%** | **0.50%** | **0.50%** | **2.25%** | **54.75%** | **100.00%** |
| Batch kg | **220.0** | **200.0** | **5.0** | **5.0** | **22.50** | **547.5** | **1000.0** |

**Table 6B.**

| **Cheese with sweet permeate** | Na-Caseinate | Plant Fat | Salt | Citric Acid 50% | CaCl2 (10%Ca solution) | Sweet Permeate | **Cheese** |
|---|---|---|---|---|---|---|---|
| TS | 95.10 | 99.80 | 99.00 | 49.50 | 27.30 | 5.80 | **45.4** |
| Protein | 91.00 | 0.00 | 0.00 | 0.00 | 0.00 | 0.00 | **20.0** |
| Fat | 0.50 | 99.80 | 0.00 | 0.00 | 0.00 | 0.00 | **20.1** |
| Calcium | 0.08 | 0.00 | 0.00 | 0.00 | 10.00 | 0.025 | **0.24** |
| Dosage% | **22.00%** | **20.00%** | **0.50%** | **0.50%** | **2.10%** | **54.90%** | **100.00%** |
| Batch kg | **220.0** | **200.0** | **5.0** | **5.0** | **21.0** | **549.0** | **1000.0** |

**Table 6C.**

| **Cheese with acid permeate** | Na-Caseinate | Plant Fat | Salt | Citric Acid 50% | CaCl2 (10%Ca solution) | Acid Permeate | **Cheese** |
|---|---|---|---|---|---|---|---|
| TS | 95,10 | 99,80 | 99,00 | 49,50 | 27,30 | 5,30 | **45,0** |
| Protein | 91,00 | 0,00 | 0,00 | 0,00 | 0,00 | 0,00 | **20,0** |
| Fat | 0,50 | 99,80 | 0,00 | 0,00 | 0,00 | 0,00 | **20,1** |
| Calcium | 0,08 | 0,00 | 0,00 | 0,00 | 10,00 | 0,125 | **0,24** |
| Dosage% | **22,00%** | **20,00%** | **0,50%** | **0,45%** | **1,55%** | **55,50%** | **100,00%** |
| Batch kg | **220,0** | **200,0** | **5,0** | **4,5** | **15,5** | **555,0** | **1000,0** |

Fat, caseinate and salt were kept constant in all formulas. Due to the elevated calcium content of the permeates, the dosage of calcium chloride solution was adopted accordingly to adjust a constant ratio of calcium to protein. The amount of citric acid was reduced in the prototype with acid permeate, which had a pH-value of 4.56.

### Production:

A laboratory paddle stirrer and a kitchen-scale cooker/blender (Thermomix, Vorwerck) were used for mixing and heating.

In the cheesemaking procedure water or permeate was blended with salt and heated to 65°C. Fifty percent of the caseinate was added to this liquid mix, which was stirred until the protein was widely dissolved and only a few small powder lumps were visible. The fat was melted at 50°C and then blended with the remaining caseinate to create a fat mix. Both mixes were combined, and calcium chloride and citric acid were added. The complete cheese base was further stirred and heated to 80°C in the Thermomix (stirrer setting 2 - 3) until a homogeneous mass was formed. The molten cheese base was finally hot filled into plastic cups and immediately cooled. The chemical analysis of the resultant product, i.e. cheese base, is shown in Table 7.

**Table 7. Chemical Analyses of the dairy substitute compositions from Recipes in Tables 6A through 6C:**

| | Total Solids [%] | pH | Fat total [%] | Protein [%] Nx 6.38 |
|---|---|---|---|---|
| **Cheese Substitute Water** | 45.2 | 5.62 | 22.0 | 20.3 |
| **Cheese Substitute Sweet Permeate** | 48.0 | 5.63 | 22.2 | 20.7 |
| **Cheese Substitute Acid permeate** | 47.1 | 5.63 | 21.8 | 21.0 |

### Sensory Evaluation:

All samples were white and comparable to traditional mozzarella in appearance. They exhibited a bland taste, an elastic, slightly fibrous texture, and a smooth mouthfeel. The sample with sweet permeate was slightly firmer than the other samples and revealed a slight sweet-milky flavor note. A pleasant fermented, dairy sour note could be detected in the sample with acid permeate.

All samples showed good melt and stretch properties after heating in the microwave or in the oven. The samples with permeates showed better browning due to the higher content of lactose.

### Conclusions:

This working example demonstrates that analogue mozzarella type cheese from caseinate and plant fat cam be produced both with water and with milk permeates (of note, the caseinate here is not animal-free, but was used to demonstrate the suitability of using milk permeates as disclosed herein). The permeates deliver lactose that could potentially be used for bacterial fermentation, nutritional minerals such as calcium or potassium and riboflavin (vitamin B2). An improvement of texture and sensory properties could be achieved by using the permeates instead of water. The mineral compositions of the permeates could be further improved and adjusted by nanofiltration, so that the addition of external salts and minerals might not be necessary. Overall, the tests confirmed the potential of using permeate streams from traditional cheesemaking, together with plant fat sources and recombinant protein fractions, e.g. recombinant casein fractions, to create new and sustainable substitute dairy food compositions or hybrid cheese substitutes with high sensory quality.

### Example 3

### Cream cheese substitutes with recombinant milk protein and milk permeate

### Material and Methods

Three recipes were developed and prepared for comparison, including a cream cheese substitute with water, a cream cheese substitute made with sweet permeate, and a cream cheese substitute made with acid permeate. See Table 8.

**Table 8. Experimental Recipes for substitute cream cheese products:**

| | | Pilot Cooker | Thermomix | Thermomix |
|---|---|---|---|---|
| **Ingredients** | **Remarks** | water | sweet permeate | acid permeate |
| | | 0 | 1 | 2 |
| Protein | recombinant beta-Lactoglobulin | 5.40 % | 5.40 % | 5.40 % |
| Maltodextrin | | 4.00 % | - | - |
| Locust Bean Gum | | 0.40 % | 0.40 % | 0.40 % |
| Citrus Fiber | | 0.50% | 0.50 % | 0.50 % |
| Salt | NaCl Table Salt | 0.50 % | 0.50 % | 0.50 % |
| Lactic Acid 60% | L-Lactic Acid | 0.50 % | 0.50 % | 0.24 %* |
| Coconut Fat | | 24.00 % | 24.00 % | 24.00 % |
| Starch | Potato Starch | 3.00% | 3.00 % | 3.00 % |
| Water | Added water + condensate from direct steam heating | 61.70 % | - | - |
| Sweet UF-Permeate | from ultrafiltration of skim milk | - | 65.70 % | - |
| Acid UF-Permeat | From ultrafiltration of fermented skim milk | - | - | 65.96% |
| total batch size | in kg | 30.00 | 1.50 | 1.50 |

| | | | | |
|---|---|---|---|---|
| *pH-value prior to addition of lactic acid: pH 5.3 | | | | |

### Production:

The batch with water was taken from a separate set of experiment and produced in pilot scale. All ingredients were blended in a Karl-Schnell Cooker and heated with direct steam to 83°C . Afterwards, the product was homogenized at 200/40 bar.

The batches with permeate were blended in a kitchen-scale cooker/blender (Thermomix, Vorwerck) and heated to 83°C (stirring level 6). Homogenization was carried out with a laboratory homogenizer at 200/40 bar.

All samples were hot filled into 100 g plastic cups.

A commercial reference (full fat cream cheese from bovine milk) was purchased from a local supermarket.

Chemical analyses of the resultant cream cheese substitute products from Table 8 are shown in Table 9.

**Table 9. Chemical analyses of the substitute cream cheese products:**

| | Total Solids [%] | pH | NaCl [%] | Fat total [%] | Protein [%] N × 6.25 |
|---|---|---|---|---|---|
| Reference Commercial Product | n.d. | n.d. | 0.75 | 24.0 | 5.1 |
| Cheese Substitute Water | 38.2 | 4.78 | 0.51 | 24.3 | 4.6 |
| Cheese Substitute Sweet Permeate | 37.1 | 4.76 | 0.61 | 24.6 | 5.1 |
| Cheese Substitute Acid permeate | 36.5 | 4.88 | 0.63 | 24.8 | 5.0 |

### Sensory evaluation of the substitute cream cheese products:

Sample with water: Bland taste, slightly sour; some skin formation on surface, soft, slightly gummy texture, spoonable; fast melting mouthfeeling

Sample with sweet permeate: Slightly sweetish, milky taste; firm, spreadable texture; pleasant, creamy mouthfeeling.

Sample with acid permeate: Slightly sweetish taste, dairy-sour with slight fermented fresh cheese note; some skin formation on surface, firm, spreadable texture; smooth and creamy mouthfeeling

Texture of both permeate samples was similar when compared to the commercial product and considerably firmer than the substitute cheese prepared with water, which was slightly lower in protein.

### Viscoelastic properties of the substitute cream cheese products:

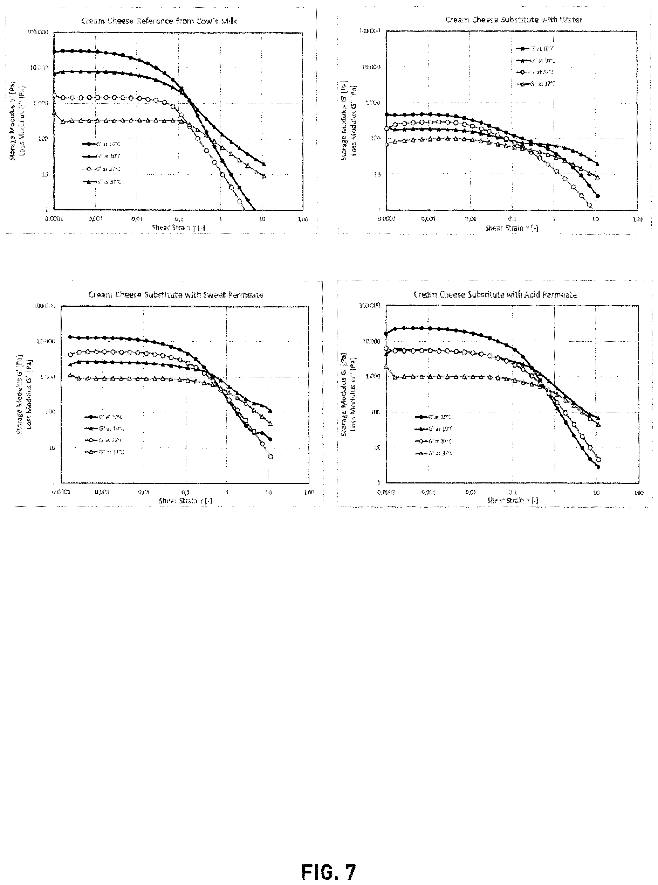

The viscoelastic properties of cream cheeses were determined by small amplitude oscillatory rheometry. A controlled-stress rheometer (Anton Paar MCR 302) was used with a 20-mm parallel plate geometry and a 1 mm gap. Amplitude sweeps were performed at a constant frequency of 0.1 Hz and a logarithmic strain ramp ranging from 0.0001 to 10. The measurements were carried out at 10°C (storage temperature) and 37°C (temperature during consumption in the mouth). The parameters measured and calculated were storage modulus G' (elastic, solid-like properties), loss modulus G" (viscous, liquid-like properties), loss factor (ratio of viscous to elastic properties) and flow point τ_{f} (shear stress at the cross-over point where G'=G"). More details on the evaluation of textural properties of cream cheese can be found in scientific papers, e.g. Brighenti et al. (2008): Characterization of the Rheological, Textural, and Sensory Properties of Samples of Commercial US Cream Cheese with Different Fat Contents. J. Dairy Sci. 91 or Bayarri et al. (2012): Viscoelasticity and texture of spreadable cheeses with different fat contents at refrigeration and room temperatures. J. Dairy Sci. As a reference, a commercial full fat cream cheese from cow's milk (Cremia brand) was evaluated. Data is shown in Tables 10 and 11 below. Additionally, FIG. 7 shows the moduli G' and G" for amplitude sweeps at 10°C and 37°C. The curves represent the average of two measurements and are displayed in a double-logarithmic scale.

**Table 10. Viscoelastic data for measurements at 10 °C**

| | Average values in linear viscoelastic region | | | Values at cross-over G'= G" | | |
|---|---|---|---|---|---|---|
| | G' [Pa] | G" [Pa] | tan δ ( G"/G') | G' = G" [Pa] | strain γ [%] | flow stress τ_{f} [Pa] |
| Reference | 29627 | 7844 | 0.266 | 1323 | 17.1 | 322.0 |
| Water | 467 | 183 | 0.392 | 70.6 | 39.9 | 39.8 |
| Sweet Permeate | 12755 | 2653 | 0.208 | 1331 | 37.4 | 690.0 |
| Acid permeate | 22731 | 5636 | 0.248 | 1687 | 29.6 | 707.5 |

**Table 11. Viscoelastic data for measurements at 37 °C**

| | Average values in linear viscoelastic region | | | Values at cross-over G'= G" | | |
|---|---|---|---|---|---|---|
| | G' [Pa] | G" [Pa] | tan δ ( G"/G') | G' = G" [Pa] | strain γ [%] | flow stress τ_{f} [Pa] |
| Reference | 1468 | 330.7 | 0.225 | 281 | 16.1 | 63.4 |
| Water | 309.8 | 112.4 | 0.363 | 61.8 | 20.3 | 17.6 |
| Sweet Permeate | 5146 | 906.7 | 0.176 | 528 | 62.8 | 467 |
| Acid permeate | 5361 | 1004 | 0.187 | 474 | 56.9 | 381 |

### Conclusions:

The cheese substitute samples with milk permeates show similar viscoelastic properties compared to a commercial cream cheese, especially at 10°C. Differences seen at 37°C are mainly related to the different melting properties of milk fat and coconut oil. The sample prepared with water is significantly softer, shows the highest loss factor (behavior less elastic, less gel-like) and the lowest flow stress. The minerals in the milk permeates, particularly the high calcium content in acid permeate, seem to promote protein aggregation, and therefore can in some aspects lead to improved texture formation. In addition, the use of permeates results in an improvement of the flavor profile.

### Example 4

### Fermentation trials with recombinant beta-lactoglobulin and sweet UF-permeate from milk.

### Material and Methods

Raw materials: The raw materials used in these experiments included recombinant beta-lactoglobulin powder (96% solids, 95% protein), sweet UF-permeate from skim milk, water, glucose, yeast extract, vegan lactic acid bacteria culture . The compositions of the fermentation media are shows in Table. 12.

**Table 12. Compositions of the fermentation media**

| w/w % | **Sweet UF Permeate** | **Medium A** | **Medium B** |
|---|---|---|---|
| beta-Lactoglobulin powder | 5.0 | 5.0 | 5.0 |
| UF-permeate | 94.8 | - | - |
| Water | - | 90.9 | 91.0 |
| Glucose | | 3.8 | 3.8 |
| Yeast Extract | - | 0.1 | - |
| Culture | 0.2 | 0.2 | 0.2 |

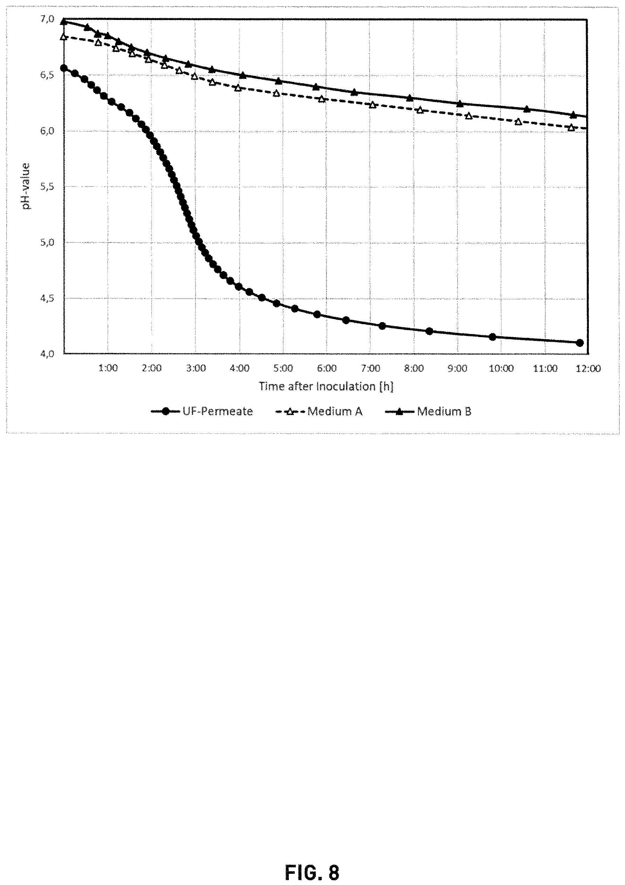

Method: The three batches were pasteurized, incubated with bacteria cultures and fermented at 40°C. The course of the pH-value over time is shown in FIG. 8.

With UF-permeate, it took less than five hours to reach a pH-value below 4.5, a value typical for fresh dairy products such as yoghurt or fresh cheese. This shows that the substitute dairy products made using the methods herein, including permeates, provides all the nutrients needed for the bacteria to grow and to produce lactic acid.

When the recombinant whey protein is mixed with just water and glucose, the pH value drops only slightly to about 6.0, even after 12 hours of fermentation. This effect is likely due to the high purity of the protein powder and the lack of essential nutrients. Addition of yeast extract did not result in a significant improvement in bacterial acidification.

### References:

BRIGHENTI et al. (2008): Characterization of the Rheological, Textural, and Sensory Properties of Samples of Commercial US Cream Cheese with Different Fat Contents. J. Dairy Sci. 91
BAYARRI et al. (2012): Viscoelasticity and texture of spreadable cheeses with different fat contents at refrigeration and room temperatures. J. Dairy Sci.
WOLFSCHOON-POMBO, SPIEGEL (2018): A method for the manufacture of a flavor-enhancing composition*.* EP3609337B1.
O'DONOCHUE, MURPHY. (2023). Nondairy food applications of whey and milk permeates: Direct and indirect uses. Comp Rev Food Sci Food Safe, Volume: 22, Issue: 4, Pages: 2652-2677.
REITMAIER AND KULOZIK (2022): Compositional analysis of dairy side streams and assessment of their applicability as diafiltration media. International Journal of Dairy Technology. Vol 75, 3.
U.S. Patent No. 9,924,728
U.S. Patent Application Publication No. US20190216106
PCT Patent Application Publication No. WO2019213155
PCT Patent Application Publication No. WO2021/050759

It will be understood that various details of the presently disclosed subject matter may be changed without departing from the scope of the presently disclosed subject matter. Furthermore, the foregoing description is for the purpose of illustration only, and not for the purpose of limitation.

## Claims

1. A dairy substitute food composition, the composition comprising:
one or more non-animal proteins;
and
a liquid dairy side stream, the liquid dairy side stream being derived from mammalian milk, the liquid dairy side stream comprising water, sugar and minerals.

2. The dairy substitute food composition of claim 1, wherein the non-animal protein comprises a recombinant protein, preferably a recombinant casein.

3. The dairy substitute food composition of claim 1 or 2, wherein the non-animal protein comprises a plant protein.

4. The dairy substitute food composition of any of the preceding claims, wherein the dairy substitute food composition comprises about 3% to about 40% protein.

5. The dairy substitute food composition of any of the preceding claims, further comprising a non-animal lipid, preferably a plant fat or recombinant fat.

6. The dairy substitute food composition of claim 5, wherein the dairy substitute food composition comprises about 0.2% to about 40% lipid.

7. The dairy substitute food composition of any of the preceding claims, wherein the liquid dairy side stream comprises a whey permeate, wherein the whey permeate is a by-product of cheese making from mammalian milk.

8. The dairy substitute food composition of any of the preceding claims, wherein the liquid dairy side stream comprises a permeate from milk, preferably a sweet milk permeate, the permeate from milk comprising about 1% to about 10% total solids, about 0.01% w/w to about 0.1% w/w sodium, about 1% w/w to about 10% w/w lactose, about 0.05% w/w to about 0.5% w/w potassium, and about 0.01% w/w to about 0.1% w/w calcium.

9. The dairy substitute food composition of any of the preceding claims, wherein the liquid dairy side stream comprises a permeate from fermented or directly acidified milk, preferably a sour milk permeate, the permeate from fermented or directly acidified milk comprising about 1% to about 10% total solids, about 0.01% w/w to about 0.1 % w/w sodium, about 1% w/w to about 10% w/w lactose, about 0.05% w/w to about 0.5% w/w potassium, and about 0.05% w/w to about 0.5% w/w calcium.

10. The dairy substitute food composition of any of the preceding claims, wherein liquid dairy side stream comprises acid whey, wherein the acid whey is derived from the production of fresh cheese, cottage cheese, quark, Greek yoghurt and/or skyr.

11. The dairy substitute food composition of any of the preceding claims, wherein liquid dairy side stream further comprises vitamins and organic acids.

12. The dairy substitute food composition of any of the preceding claims, wherein the substitute dairy food product comprises a cheese, preferably selected from the group consisting of a semi-hard, a hard cheese, a white cheese, a fresh cheese, a cream cheese and a soft cheese.

13. The dairy substitute food composition of any of the preceding claims, wherein the substitute dairy food product is substantially free of an animal protein and/or substantially free of an animal lipid.

14. The dairy substitute food composition of any of the preceding claims, further comprising one or more additional components selected from the group consisting of a cheese culture, an enzyme, salt, a hydrocolloid, a herb, a spice, a flavoring agent, a coloring agent, and combinations thereof.

15. A method of producing a dairy substitute food composition, preferably a food composition according to any of the preceding claims, the method comprising:
providing one or more non-animal proteins;
providing a liquid dairy side stream, the liquid dairy side stream being derived from mammalian milk, the liquid dairy side stream comprising water, sugar and minerals; and
mixing and dispersing the non-animal protein with the liquid dairy side stream to obtain a base composition for the dairy substitute food composition.
